# FASCICULE DE BREVET EUROPEEN

(11) **EP 2 128 487 B1**
(45) Date de publication et mention de la délivrance du brevet: **23.11.2011**
(21) Numéro de dépôt: 09290330.1
(22) Date de dépôt: 06.05.2009
(51) Int. Cl.: F16H 3/00, F16H 3/091, F16H 3/093

(54) **Boîte de vitesses à double embrayage comportant un liaison de transfert entre les deux arbres primaires**
Getriebe mit Doppelkupplung, das über eine Übertragungsverbindung zwischen den beiden Hauptwellen verfügt
Double-clutch gearbox comprising a transfer link between the two main shafts

(30) Priorité: 07.05.2008 FR 0802562
(43) Date de publication de la demande: 02.12.2009
(73) Titulaire: Théry, Pascal, 80000 Amiens (FR)
(72) Inventeur: Théry, Pascal, 80000 Amiens (FR)

(56) Documents cités:
- WO-A-2006/128626
- DE-A1- 10 015 336
- FR-A- 2 885 978
- JP-A- 2003 120 764
- JP-A- 2004 332 840

## Description

La présente invention concerne une boîte de vitesses pour une transmission d'un véhicule automobile.

Un type de boîte de vitesses automatique connu appelé transmission à double embrayage, comporte deux arbres primaires d'entrée coaxiaux reliés chacun à l'arbre d'un moteur par un embrayage pouvant fonctionner à sec ou dans l'huile. Chaque arbre primaire peut transmettre le mouvement reçu du moteur, à un ou plusieurs arbres secondaires suivant différents rapports de démultiplication. Ces arbres secondaires entraînent par un différentiel les roues motrices du véhicule.

Chaque rapport de démultiplication comporte un couple de pignons formant un engrenage, transmettant le mouvement d'un arbre primaire à un arbre secondaire suivant un rapport de démultiplication correspondant à un rapport de vitesse de la boîte de vitesses.

Un pignon de chaque engrenage est fixé sur son arbre, l'autre pignon monté libre en rotation peut être rendu solidaire de son arbre par le coulissement axial d'un manchon de synchronisation réalisant une synchronisation de la vitesse du pignon libre, puis un crabotage de ce pignon engageant le rapport de vitesse.

Les rapports de vitesse pris dans un ordre croissant qui procure une vitesse de plus en plus élevée du véhicule, dépendent alternativement de l'un et de l'autre des arbres primaires. En passant le couple progressivement d'un embrayage à l'autre, on assure une continuité de la transmission du couple moteur vers les roues motrices pendant les changements de rapports de vitesse.

Les commandes des embrayages et des rapports de vitesse, comprennent des actionneurs pilotés par un calculateur recevant des informations sur le fonctionnement du véhicule et sur les demandes du conducteur.

Un perfectionnement à ce type de boîte de vitesses est décrit dans le document DE-A1-10015336, qui constitue l'état de la technique le plus proche. Chaque arbre primaire peut entraîner un arbre secondaire suivant deux rapports de démultiplication correspondant pour un premier arbre primaire au troisième et cinquième rapport de vitesse, et pour un deuxième arbre primaire au deuxième et quatrième rapport de vitesse.

De plus une liaison de transfert comprenant un arbre parallèle de transfert et deux engrenages, permet de relier les deux arbres primaires entre eux suivant un rapport de démultiplication défini réalisant une réduction de la vitesse du deuxième arbre primaire par rapport à celle du premier arbre primaire.

On forme un premier rapport de vitesse en utilisant en série à partir du premier arbre primaire, la liaison de transfert réalisant une réduction de la vitesse du deuxième arbre primaire, puis le rapport de démultiplication du deuxième rapport de vitesse, pour obtenir un premier rapport de vitesse plus démultiplié que le deuxième. Le passage du premier au deuxième rapport de vitesse se fait de manière continue, en basculant le couple moteur d'un embrayage vers l'autre.

De même à partir du deuxième arbre primaire en utilisant en série la liaison de transfert dans l'autre sens réalisant une augmentation de la vitesse du premier arbre primaire, puis le rapport de démultiplication du cinquième rapport de vitesse, on obtient un sixième rapport de vitesse moins démultiplié que le cinquième rapport. Le passage du cinquième au sixième rapport de vitesse ce fait aussi de manière continue.

Un problème posé par ce type de boîte de vitesses est que l'on dispose de six rapports de vitesse avec un écart entre le premier et le deuxième égal à celui entre le cinquième et le sixième, ce qui procure un mauvais étagement des rapports de vitesse.

Par ailleurs le sixième rapport de vitesse qui est un rapport élevé, utilise pour la transmission du mouvement la liaison de transfert en série avec le cinquième rapport de vitesse, ce qui ajoute deux engrènements dans la chaîne cinématique, et donc des pertes de rendement qui posent un problème dans la mesure où l'on utilise généralement les rapports de vitesse supérieurs pour réduire la consommation du moteur.

La présente invention a notamment pour but d'éviter ces inconvénients de l'art antérieur, et de proposer une transmission compacte comprenant en particulier une longueur axiale limitée, comportant un bon étagement des rapports de vitesse ainsi qu'un bon rendement sur les rapports de vitesse supérieurs.

Elle propose à cet effet une boîte de vitesses, selon la revendication 1, comportant un premier et un deuxième arbre primaire disposés suivant un axe commun et reliés chacun par un embrayage à un moteur, et au moins un arbre secondaire portant un pignon de sortie qui engrène avec la couronne d'un différentiel entraînant les roues motrices du véhicule, chaque arbre primaire pouvant être relié à un arbre secondaire par des rapports de démultiplication comprenant chacun deux pignons réalisant un engrenage, formant pour le deuxième arbre primaire un deuxième et un quatrième rapport de vitesse, et pour.le premier arbre primaire un troisième et un cinquième rapport de vitesse, une unique liaison de transfert de marche avant comprenant un arbre de transfert, pouvant relier les deux arbres primaires entre eux en réduisant la vitesse du deuxième arbre primaire par rapport à celle du premier arbre primaire, caractérisée en ce qu'elle comporte un rapport de démultiplication supplémentaire formant un sixième rapport de vitesse, pouvant relier directement le deuxième arbre primaire à un arbre secondaire par deux pignons formant un engrenage.

Un avantage de la boîte de vitesses suivant l'invention est qu'elle permet de réaliser un rapport de vitesse supérieur comprenant seulement un engrenage entre l'arbre primaire et l'arbre secondaire, ce qui procure un bon rendement, et peut permettre d'ajuster la valeur de ce rapport de vitesse indépendamment des autres.

La boîte de vitesses selon l'invention peut en outre comporter une ou plusieurs des caractéristiques suivantes, qui peuvent être combinées entre elles.

Avantageusement, le deuxième un arbre primaire comporte un creux longitudinal traversé par le premier arbre primaire.

Avantageusement, le sixième rapport de vitesse comporte un pignon fixe disposé sur le deuxième arbre primaire.

Avantageusement, un pignon fixe d'entraînement placé axialement entre deux rapports de vitesse du premier arbre primaire, engrène uniquement avec un pignon de l'arbre de transfert.

Selon une disposition particulière, la boîte de vitesses comporte un deuxième arbre secondaire, l'arbre de transfert comportant un creux longitudinal, étant traversé par un des arbres secondaires.

Selon une autre disposition particulière, la boîte de vitesses comporte un deuxième arbre secondaire, l'arbre de transfert étant latéralement décalé par rapport aux arbres secondaires.

La boîte de vitesses peut comporter un pignon fixe commun sur le deuxième arbre primaire, pour réaliser le quatrième et le sixième rapport de vitesse.

La boîte de vitesses peut comporter un rapport de démultiplication supplémentaire formant un septième rapport de vitesse.

Elle peut comporter un pignon fixe commun sur le premier arbre primaire, pour réaliser le cinquième et le septième rapport de vitesse.

Avantageusement, le septième rapport de vitesse se trouve à l'arrière du premier arbre primaire.

Avantageusement, le deuxième rapport de vitesse est situé en avant des autres rapports de vitesse du deuxième arbre primaire.

Avantageusement, une roue de parking portée par l'arbre de transfert ou un arbre secondaire, est sensiblement alignée transversalement avec le manchon de synchronisation du deuxième rapport de vitesse.

Suivant un mode de réalisation, la boîte de vitesses comporte un pignon monté libre en rotation sur l'arbre de transfert et engrenant avec la couronne du différentiel, ce pignon étant lié en rotation à une roue de parking.

Suivant une disposition particulière, la boîte de vitesses comporte successivement en partant du côté avant sur le deuxième arbre primaire, le deuxième, le sixième puis le quatrième rapport de vitesse.

Avantageusement, un dernier rapport de vitesse surmultiplié est réalisé à partir du deuxième arbre primaire, avec le transfert T effectuant une multiplication de vitesse, disposé en série avec le cinquième ou le septième rapport de vitesse du premier arbre primaire.

L'invention sera mieux comprise et d'autres caractéristiques et avantages apparaîtront plus clairement à la lecture de la description détaillée ci-après donnée à titre d'exemple, et faite en référence aux dessins annexés dans lesquels :
- la figure 1 est un schéma d'une boîte à cinq rapports de démultiplication suivant l'invention, comportant un arbre secondaire ;
- la figure 2 est un tableau présentant un mode de fonctionnement de cette boîte de vitesses ;
- la figure 3 est un schéma d'une boîte à six rapports de démultiplication, comportant deux arbres secondaires ;
- la figure 4 est un schéma d'une boîte à sept rapports de démultiplication, comportant deux arbres secondaires ;
- la figure 5 est un schéma d'une boîte à sept rapports de démultiplication, selon une variante ;
- la figure 6 est un schéma d'une boîte à six rapports de démultiplication, comprenant un arbre de transfert indépendant des arbres secondaires ;
- la figure 7 est un schéma d'une boîte à sept rapports de démultiplication, comprenant un arbre de transfert indépendant des arbres secondaires ;
- la figure 8 est un schéma d'une boîte à cinq rapports de démultiplication comportant un arbre secondaire, selon une variante ; et
- la figure 9 est un schéma d'une boîte à six rapports de démultiplication comportant deux arbres secondaires, selon une variante.

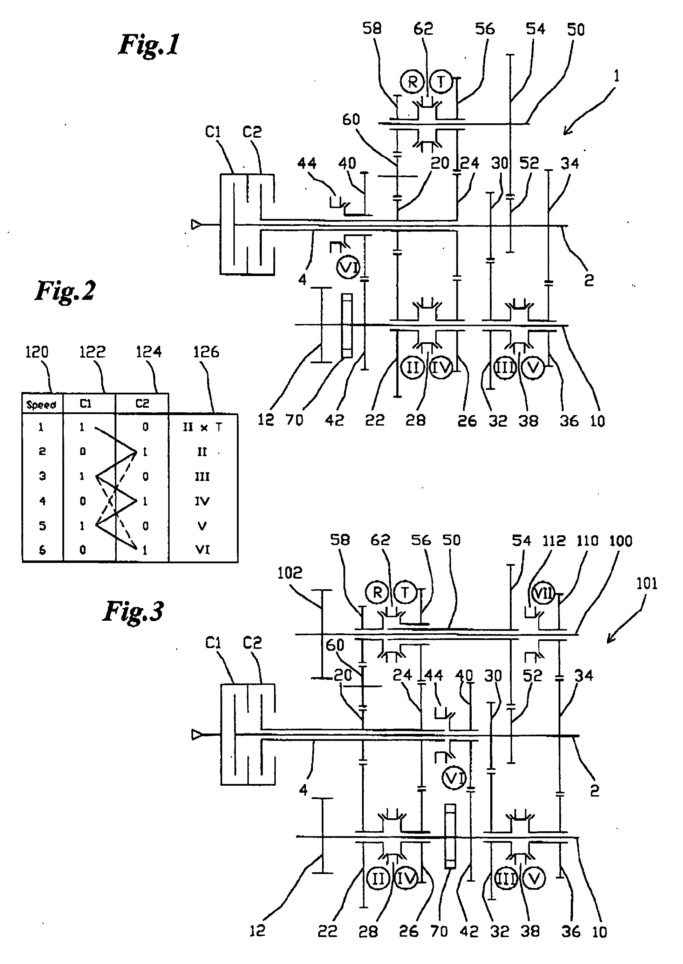

La figure 1 représente une boîte de vitesses 1 recevant le mouvement d'une motorisation non représentée, entraînant deux embrayages C1, C2 disposés suivant un même axe. Le premier embrayage C1 disposé axialement du côté du moteur ou côté savant, est lié à un premier arbre primaire plein 2, et le deuxième embrayage C2 disposé axialement du côté opposé au moteur ou côté arrière, est lié à un deuxième arbre primaire 4 comportant un creux longitudinal qui est traversé par le premier arbre primaire.

Un arbre secondaire 10 et un arbre de transfert 50 qui lui est latéralement décalé, sont disposés parallèlement aux arbres primaires 2, 4.

On appende par la suite rapport de démultiplication un couple de pignon formant un engrenage, pouvant relier directement un arbre primaire à un arbre secondaire.

Sur le deuxième arbre primaire 4, on trouve successivement en partant du côté avant, un manchon de synchronisation 44 qui permet de craboter un pignon libre 40 placé vers l'arrière, d'un rapport de démultiplication formant le sixième rapport de vitesse VI, un pignon fixe 20 d'un rapport de démultiplication formant le deuxième rapport de vitesse II, et un autre pignon fixe 24 d'un rapport de démultiplication formant le quatrième rapport de vitesse IV.

Sur le premier arbre primaire 2 on trouve successivement en partant du côté avant, après le deuxième arbre primaire 4, un pignon fixe 30 d'un rapport de démultiplication formant le troisième rapport de vitesse III, un pignon fixe 52 qui engrène uniquement avec un pignon 54 fixé sur l'arbre de transfert 50 pour l'entraîner suivant une réduction de la vitesse, et un autre pignon fixe 34 d'un rapport de démultiplication formant le cinquième rapport de vitesse V.

Sur l'arbre secondaire 10 on trouve en partant du côté avant, un pignon de sortie 12 qui engrène avec la couronne d'un différentiel non représenté, entraînant les roues motrices du véhicule.

On trouve ensuite des pignons qui engrènent avec les pignons des rapports de vitesse des deux arbres primaires 2, 4, soit successivement un pignon fixe 42 du sixième rapport de vitesse VI, un pignon libre 22 du deuxième rapport de vitesse II et un autre pignon libre 26 du quatrième rapport IV de vitesse, avec un manchon de synchronisation 28 placé entre les deux pour alternativement craboter l'un ou l'autre de ces pignons libres, et enfin un pignon libre 32 du troisième rapport de vitesse III et un autre pignon libre 36 du cinquième rapport de vitesse V, avec un manchon de synchronisation 38 placé entre les deux pour alternativement craboter l'un ou l'autre de ces pignons libres.

On a de plus sur l'arbre secondaire 10 une roue 70 comportant des dentures externes, placée axialement entre le pignon de sortie 12 et le pignon fixe 42 du sixième rapport de vitesse VI. Cette roue 70 située transversalement en face du manchon de synchronisation 44 permet sans ajouter de longueur supplémentaire à la boîte de vitesses, de réaliser un blocage de parking par un loquet venant dans un creux de denture pour immobiliser l'arbre secondaire 10, et donc le véhicule.

Les cinq rapports de démultiplication formant les rapports de vitesse notés successivement II à VI, réalisent dans l'ordre une augmentation de plus en plus grande de la vitesse de l'arbre secondaire 10.

Sur l'arbre de transfert 50, on trouve successivement en partant du côté avant, un pignon libre 58 d'une liaison de transfert formant un rapport de marche arrière R, et un autre pignon libre 56 d'une unique liaison de transfert T de marche avant, avec un manchon de synchronisation 62 placé entre les deux pour alternativement craboter l'un ou l'autre de ces pignons libres, et enfin le pignon fixe 54 pour l'entraînement de l'arbre de transfert 50.

Le pignon libre 58 du rapport de marche arrière R engrène avec un pignon intermédiaire 60 monté libre sur un axe court directement fixé au carter de la boîte de vitesses, ce pignon intermédiaire engrenant à son tour avec le pignon fixe 20 du deuxième rapport de vitesse II.

Le fonctionnement de la boîte de vitesses 1 est présenté par le tableau de la figure 2. La première colonne 120 présente le numéro d'ordre du rapport de vitesse, la deuxième colonne 122 l'engagement du premier embrayage C1, la troisième colonne 124 l'engagement du deuxième embrayage C2, et la quatrième colonne 126 les rapports engagés. Les traits inclinés représentent les passages de vitesse permettant de maintenir un couple moteur sur les roues motrices du véhicule.

Pour le premier rapport de vitesse, on engage simultanément la liaison de transfert T et le deuxième rapport de vitesse II, et on ferme le premier embrayage C1. On réalise en partant du premier arbre primaire 2 une première démultiplication de la vitesse du deuxième arbre primaire 4 en passant par la liaison de transfert T, comprenant le premier couple de pignon 52, 54 entraînant l'arbre de transfert 50, puis le deuxième couple de pignon 56, 24. On réalise ensuite avec une deuxième démultiplication constituée par le rapport de vitesse II, l'entraînement de l'arbre secondaire 10.

On obtient ainsi avec le produit de deux démultiplications successives, un premier rapport de vitesse qui peut être fortement démultiplié alors que chacune des démultiplications ne l'est pas beaucoup. Le premier rapport de vitesse peut en particulier être nettement plus démultiplié que ceux obtenus par un seul couple de pignons reliant directement les arbres primaire et secondaire, qui fournissent une démultiplication limitée par le diamètre minimum que l'on peut donner au pignon menant.

Un premier rapport de vitesse fortement démultiplié a pour avantage notamment dans le cas d'un démarrage en côte du véhicule très chargé, de dissiper dans l'embrayage C1 nettement moins d'énergie due au frottement.

Pour le passage du premier au deuxième II rapport de vitesse, on bascule progressivement le couple moteur du premier embrayage C1 au deuxième embrayage C2. On réalise ensuite successivement des passages jusqu'au sixième rapport de vitesse VI, en engageant le rapport suivant, puis en basculant le couple moteur d'un embrayage à l'autre.

On obtient ainsi une boîte de vitesses permettant de maintenir un couple moteur pendant les passages de tous les rapports de vitesse, et comportant un bon rendement sur les cinq rapports supérieurs les plus employés, qui utilisent un seul engrènement pour relier un des arbres primaire 2, 4, à l'arbre secondaire 10.

Le premier rapport de vitesse étant utilisé seulement pendant un temps très court, pour le démarrage du véhicule notamment, la perte de rendement sur ce rapport due à liaison de transfert T n'est pas significative.

Cette boîte de vitesses 1 comprend un seul arbre secondaire 10, ce qui est compacte et économique.

La liaison de transfert T comprenant sur le premier arbre primaire 2 un pignon 52 utilisé uniquement pour l'entraînement de l'arbre de transfert 50, permet d'ajuster le rapport de cette liaison, et donc l'écart entre le premier et le deuxième rapport de vitesse indépendamment du choix des écarts pour les autres rapports de vitesse.

Ainsi, on notera que les valeurs de tous les rapports de vitesse peuvent être ajustés indépendamment les uns des autres.

La disposition particulière présentée permet de plus de réaliser une boîte de vitesse compacte. Le pignon 52 entraînant l'arbre de transfert 50 avec une réduction de la vitesse, et comportant un diamètre suffisamment petit, peut être placé entre les pignons fixes 30, 34 des troisième III et cinquième V rapport de vitesse, transversalement en face du manchon de synchronisation 38 de ces deux rapports de vitesse, sans sensiblement augmenter la distance entre l'axe des arbres primaires 2, 4 et celui de l'arbre secondaire 10, ni ajouter de longueur supplémentaire à la boîte de vitesses.

En variante, les positions du pignon libre 40 et du pignon fixe 42 du sixième rapport de vitesse VI pourraient être échangées entre elles, le manchon de synchronisation 44 venant sur l'arbre secondaire 10.

La figure 3 présente une boîte de vitesses 101 à six rapports de démultiplication, comprenant un deuxième arbre secondaire 100 parallèle aux autres arbres, qui comporte du côté avant un deuxième pignon de sortie 102 engrenant aussi avec la couronne du différentiel.

Le rapport de démultiplication formant le sixième rapport de vitesse VI lié au deuxième arbre primaire 4, est placé axialement à l'arrière de cet arbre primaire 4, après le quatrième rapport de vitesse IV.

L'arbre de transfert 50 ainsi que les deux pignons libres 56, 58 commandés par le manchon de synchronisation 62 lié à cet arbre de transfert, comportent un creux longitudinal et sont portés par le deuxième arbre secondaire 100 qui les traverse axialement de part en part,

Un pignon libre 110 porté par le deuxième arbre secondaire 100, et placé en arrière de l'arbre de transfert 50, engrène avec le pignon fixe 34 du cinquième rapport de vitesse V pour réaliser un rapport de démultiplication formant le septième rapport de vitesse VII Un manchon de synchronisation 112 placé du côté avant de ce pignon libre 110, permet de craboter ce pignon sur le deuxième arbre secondaire 100 en engageant le septième rapport de vitesse VII. L'utilisation d'un pignon commun 34 pour le cinquième V et le septième VII rapport de vitesse, permet de réduire la longueur de la boîte de vitesses.

La valeur de ce septième rapport de vitesse VII utilisant un pignon fixe 34 commun avec le cinquième rapport de vitesse V, est ajustée par le diamètre du deuxième pignon de sortie 102. On peut ainsi ajuster la valeur ce septième rapport de vitesse VII indépendamment de celles des autres rapports.

Le passage du sixième VI au septième VII rapport de vitesse se fait comme pour les passages précédents, en maintenant un couple moteur sur les roues motrices. De plus en utilisant un seul engrènement, le rendement de ce septième rapport de vitesse VII est bon.

En variante les positions axiales du sixième rapport de vitesse VI présentées par les boîtes de vitesses des figures 1 et 3, peuvent être échangées entre elles.

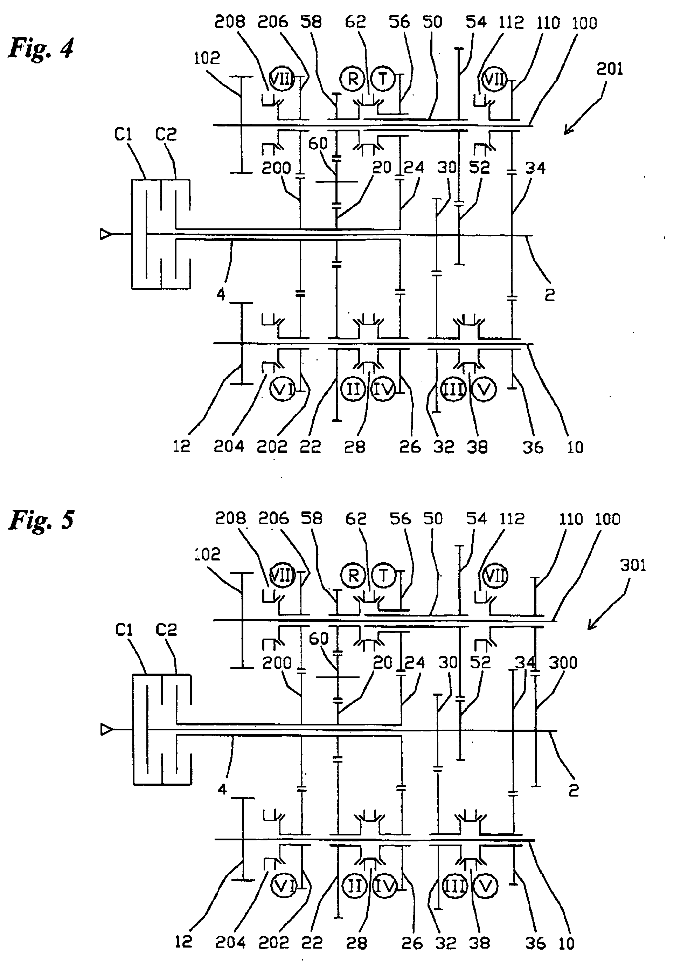

La figure 4 présente une boîte de vitesses 201 comportant un rapport de démultiplication supplémentaire formant un rapport de vitesse VIII.

Le deuxième arbre primaire 4 comporte placé du côté avant du pignon fixe 20 du deuxième rapport II, un pignon fixe 200 engrenant avec un pignon libre 202 porté par le premier arbre secondaire 10, qui peut être craboté par un manchon de synchronisation 204 placé du côté avant de ce pignon pour réaliser un rapport de démultiplication formant le sixième rapport de vitesse VI.

Ce pignon fixe 200 engrène aussi avec un pignon libre 206 porté par le deuxième arbre secondaire 100, qui peut être craboté par un manchon de synchronisation 208 placé du côté avant de ce pignon pour réaliser un rapport de démultiplication formant le huitième rapport de vitesse VIII. L'utilisation d'un pignon commun 200 pour le sixième VI et le huitième VIII rapport de vitesse, permet de réduire la longueur de la boîte de vitesses.

En variante, on pourrait placer les manchons de synchronisation 204, 208 du côté arrière des pignons libres 202, 206.

On réalise ainsi à partir d'un même pignon fixe 200 porté par le deuxième arbre primaire 4, vers chacun des arbres secondaires 10, 100, un sixième VI et un huitième VIII rapport de vitesse. Cette disposition utilisant un pignon fixe commun 200, permet de garder pour la boîte de vitesses 201 sensiblement la même longueur que pour celle 101 présentée figure 3.

L'écart entre les valeurs du sixième VI et du huitième VIII rapport de vitesse, est lié à celui entre le cinquième V et le septième VII rapport. Cette caractéristique est peu gênante dans la mesure où les valeurs des derniers rapports de vitesse d'une boîte de vitesses à huit rapports sont assez rapprochées.

La figure 5 présente une boite de vitesses 301 à huit rapports de vitesse similaire à celle présentée figure 4, mais dont toutes les valeurs des rapports de vitesse peuvent être ajustées indépendamment les unes des autres.

Le premier arbre primaire 2 comporte placé du côté arrière du pignon fixe 34 du cinquième rapport de vitesse V, un pignon fixe 300 qui engrène avec le pignon libre 110 porté par le deuxième arbre secondaire 100, pour constituer un rapport de démultiplication formant le septième rapport de vitesse VII. Ce pignon libre 110 peut être craboté par le manchon de synchronisation 112 qui est placé du côté avant du pignon fixe 34 du cinquième rapport de vitesse V.

On peut de cette manière avec une petite augmentation de la longueur de la boîte de vitesses, garder un choix indépendant pour toutes les valeurs de chaque rapport de vitesse. De plus, le dessin reste assez proche de ceux présentés par les figures 3 et 4.

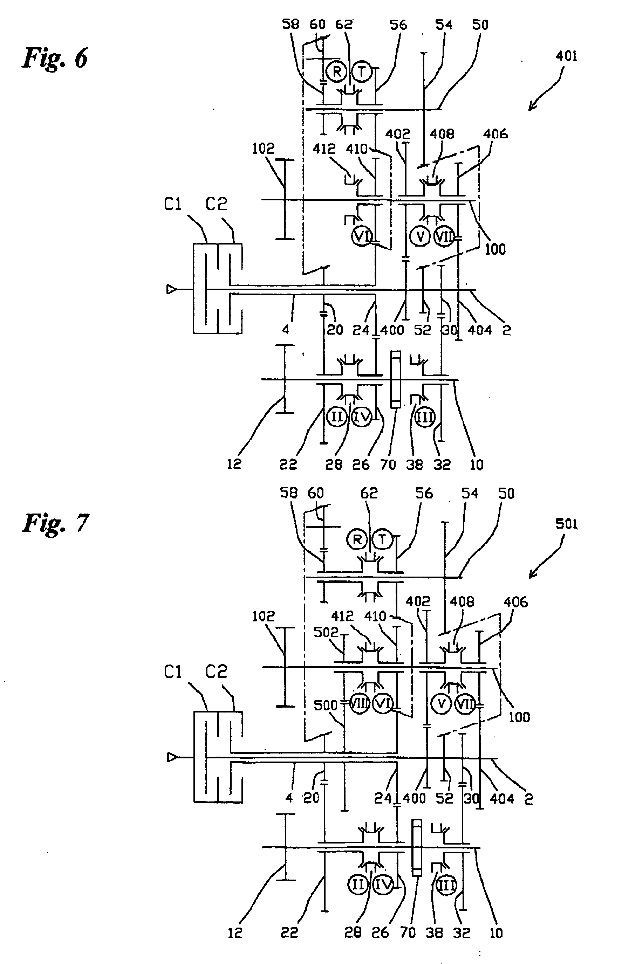

La figure 6 présente une boîte de vitesses 401 à six rapports de démultiplication comportant deux arbres secondaires 10, 100, et un arbre de transfert 50 latéralement décalé par rapports à ces arbres secondaires.

Le premier arbre primaire 2 comporte successivement en partant du côté avant, un pignon fixe 400 qui engrène avec un pignon libre 402 porté par le deuxième arbre secondaire 100 pour réaliser un rapport de démultiplication formant le cinquième rapport de vitesse V, le pignon fixe 52 d'entraînement de l'arbre de transfert 50, le pignon fixe 30 qui engrène avec le pignon libre 32 porté par le premier arbre secondaire 10, pour réaliser un rapport de démultiplication formant le troisième rapport de vitesse III, et un pignon fixe 404 qui engrène avec un pignon libre 406 porté par le deuxième arbre secondaire 100, pour réaliser un rapport de démultiplication formant le septième rapport de vitesse VII.

Le manchon de synchronisation 38 pour le troisième rapport de vitesse III, placé du côté avant du pignon libre 32 de ce rapport, commande ce seul rapport. La roue dentée 70 pour le blocage de parking, se trouve du côté avant de ce manchon de synchronisation 38.

Un manchon de synchronisation 408 se trouve entre les pignons libres 402, 406 des cinquième V et septième VII rapports de vitesse, pour pouvoir les engager alternativement. On notera que les pignons fixes 400, 404 des deux rapports engagés par le même manchon de synchronisation 408, encadrent axialement deux pignons fixes portés par le premier arbre primaire 2, qui se trouvent latéralement en face de ce manchon, le pignon fixe 30 du troisième rapport de vitesse III ayant un diamètre assez réduit, ce qui permet de limiter la longueur de la boîte de vitesses.

Un pignon libre 410 porté par le deuxième arbre secondaire 100, engrène avec le pignon fixe 24 du quatrième rapport de vitesse IV porté par le deuxième arbre primaire 4 pour réaliser un rapport de démultiplication formant le sixième rapport de vitesse VI, un manchon de synchronisation 412 se trouvant du côté avant de ce pignon libre, engage ce rapport de vitesse. La valeur de ce sixième rapport de vitesse VI est ajustée par le diamètre du pignon de sortie 102 du deuxième arbre secondaire 100.

On notera que le manchon de synchronisation 412 du sixième rapport de vitesse VI se trouve latéralement en face de celui 28 des deuxième II et quatrième IV rapport de vitesse, ainsi que de celui 62 des liaisons de transfert R, T, sans nécessiter d'encombrement axial supplémentaire.

Par ailleurs toutes les valeurs des rapports de vitesse peuvent être ajustées de manière indépendante.

La figure 7 présente une boîte de vitesses 501 similaire à celle présentée figure 6, mais comportant un rapport de démultiplication formant un huitième rapport de vitesse VIII.

On intercale axialement entre le pignon fixe 20 du deuxième rapport de vitesse II, et le manchon de synchronisation 412 du sixième rapport de vitesse VI, un pignon fixe 500 lié au deuxième arbre primaire 4, qui engrène avec un pignon libre 502 porté par le deuxième arbre secondaire 100 pour former un rapport de démultiplication formant le huitième rapport de vitesse VIII. Le manchon de synchronisation 412 est commun au sixième VI et au huitième VIII rapport de vitesse, pour engager alternativement l'un ou l'autre de ces rapports.

On réalise ainsi une boîte de vitesses 501 à huit rapports de vitesse qui garde beaucoup de similitude avec la boîte à sept rapports 401 présentée ci-dessus, ce qui permet de standardiser des productions.

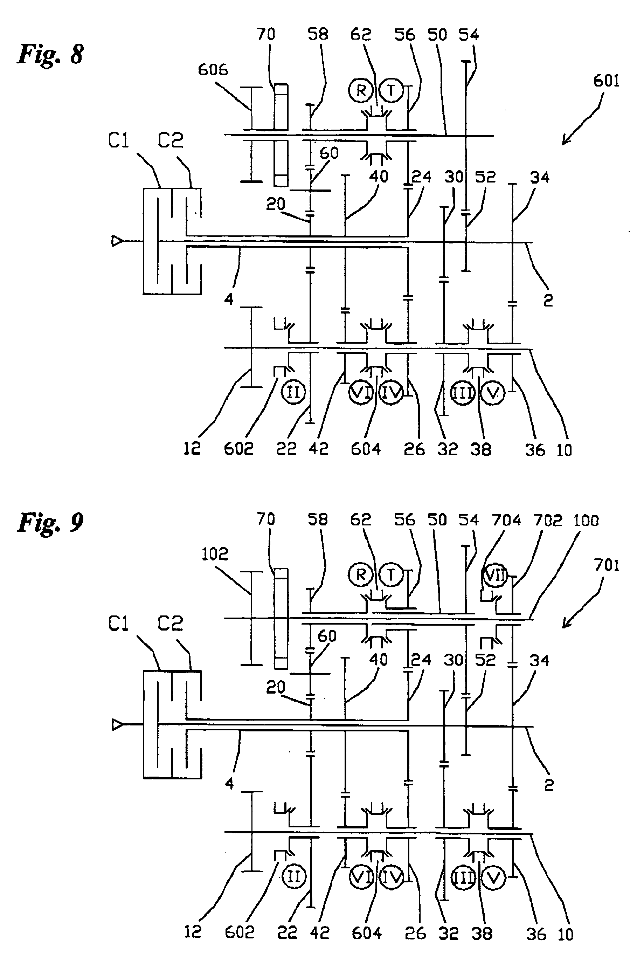

La figure 8 représente une boîte de vitesses 601 comportant un seul arbre secondaire 10, ainsi qu'un arbre de transfert 50 latéralement décalé.

Sur le deuxième arbre primaire 4, on trouve successivement en partant du côté avant, un pignon fixe 20 d'un rapport de démultiplication formant le deuxième rapport de vitesse II, un pignon fixe 40 d'un rapport de démultiplication formant le sixième rapport de vitesse VI, et un dernier pignon fixe 24 d'un rapport de démultiplication formant le quatrième rapport de vitesse IV.

Sur le premier arbre primaire 2 venant en arrière du deuxième arbre primaire 4, on trouve successivement en partant du côté avant, un pignon fixe 30 d'un rapport de démultiplication formant le troisième rapport de vitesse III, un pignon fixe 52 qui engrène uniquement avec un pignon 54 fixé sur l'arbre de transfert 50, et un dernier pignon fixe 34 d'un rapport de démultiplication formant le cinquième rapport de vitesse V.

Sur l'arbre secondaire 10 on trouve en partant du côté avant, un pignon fixe de sortie 12 qui engrène avec la couronne du différentiel. On trouve ensuite un manchon simple de synchronisation 602 placé en avant du pignon libre 22 du deuxième rapport de vitesse II, pour craboter de pignon.

On trouve ensuite des pignons libres qui engrènent avec des pignons fixes des arbres primaires 2, 4, soit un pignon libre 42 du sixième rapport de vitesse VI et un libre pignon 26 du quatrième rapport de vitesse IV, avec un manchon double de synchronisation 604 placé entre les deux pour craboter l'un ou l'autre de ces pignons, et enfin un pignon libre 32 du troisième rapport de vitesse III et un autre pignon libre 36 du cinquième rapport de vitesse V, avec un manchon double de synchronisation 38 placé entre les deux pour craboter l'un ou l'autre de ces pignons.

Sur l'arbre de transfert 50 on trouve en partant du côté avant, un pignon 606 engrenant avec la couronné du différentiel, qui est monté libre sur l'arbre de transfert 50, ce pignon étant lié en rotation à une roue de parking 70 placé du côté arrière. De cette manière, la position parking est obtenue en bloquant la roue de parking 70 l'arbre de transfert 50 pouvant tourner librement par rapport au différentiel.

On trouve ensuite sur l'arbre de transfert 50, un pignon libre 58 du rapport de marche arrière R, et un autre pignon libre 56 d'une unique liaison de transfert T de marche avant, avec un manchon double de synchronisation 62 placé entre les deux pour craboter l'un ou l'autre de ces pignons libres, et enfin le pignon fixe 54 pour l'entraînement de l'arbre de transfert 50.

Le pignon libre 58 du rapport de marche arrière R engrène avec un pignon intermédiaire libre 60, qui engrène à son tour avec le pignon fixe 20 du deuxième rapport de vitesse II.

La figure 9 présente une boîte de vitesses 701 à six rapports de démultiplication, similaire à celle présentée figure 8 mais comprenant un deuxième arbre secondaire parallèle 100, qui comporte du côté avant un pignon fixe de sortie 102 engrenant avec la couronne du différentiel.

L'arbre de transfert 50 ainsi que les deux pignons libres 56, 58 commandés par le manchon double de synchronisation 62 lié à cet arbre de transfert, comportent un creux longitudinal traversé par le deuxième arbre secondaire 100 qui les supporte.

Un pignon libre 702 porté par le deuxième arbre secondaire 100, et placé à l'arrière de l'arbre de transfert 50, engrène avec le pignon fixe 34 du cinquième rapport de vitesse V, pour réaliser un rapport de démultiplication formant le septième rapport de vitesse VII. Un manchon simple de synchronisation 704 placé du côté avant du pignon libre 702, permet de craboter ce pignon sur le deuxième arbre secondaire 100 en engageant le septième rapport de vitesse VII. L'utilisation d'un pignon commun 34 permet de réduire la longueur de la boîte de vitesses.

La valeur de ce septième rapport de vitesse VII utilisant un pignon fixe 34 commun avec le cinquième rapport de vitesse V, est ajustée par le diamètre du deuxième pignon de sortie 102. On peut ainsi ajuster la valeur ce septième rapport de vitesse VII indépendamment de celles des autres rapports de vitesse.

Le passage du sixième VI au septième VII rapport de vitesse se fait comme pour les passages précédents, en maintenant un couple moteur sur les roues motrices. De plus en utilisant un seul engrènement, le rendement de ce septième rapport de vitesse VII est bon.

Pour les boîtes de vitesses 601, 701, la partie du deuxième arbre primaire 4 transversalement alignée avec la roue de parking 70, comporte un diamètre réduit laissant un espace permettant de donner un diamètre important à cette roue. Le diamètre important de la roue de parking 70 permet de réduire les efforts de blocage des dents de cette roue, et facilite la réalisation du système de blocage.

De plus le manchon simple de synchronisation 602 du deuxième rapport de vitesse II, porté par le premier arbre secondaire 10, est aussi transversalement aligné avec cette partie du deuxième arbre primaire 4 comportant un diamètre réduit, il peut de même comprendre un grand diamètre.

On notera que pour les boîtes de vitesses 101, 601 et 701, le rapport de démultiplication formant le deuxième rapport de vitesse II transmettant un couple élevé, est situé en avant de la boîte de vitesses, près du carter séparant cette boîte des embrayages C1, C2, et contenant les roulements supportant les arbres. La flexion des arbres supportant les pignons de ce deuxième rapport de vitesse II, est réduite.

De plus le pignon intermédiaire 60 de marche arrière étant transversalement aligné sur le deuxième rapport de vitesse II, son axe le supportant qui est fixé à ce carter, peut être très court. D'autre part, le volume occupé par ce pignon intermédiaire 60 se trouve axialement en face des embrayages comportant généralement un grand diamètre, ce qui est peu gênant.

D'une manière générale, on réalise tous les passages des vitesses en maintenant un couple moteur sur les roues motrices du véhicule, et le fonctionnement sur les rapports de vitesse supérieurs comporte un bon rendement. De plus les écarts entre les rapports de vitesse peuvent généralement être choisis librement, permettant de réaliser facilement à partir d'un produit standard, des adaptations de ces rapports suivant les moteurs, ce qui contribue aussi à réduire la consommation.

On peut de plus obtenir à partir de ces différentes boîtes de vitesses, un dernier rapport surmultiplié réalisé à partir du deuxième arbre primaire 4, avec le transfert T effectuant une multiplication de vitesse, disposé en série avec le cinquième V ou le septième VII rapport de vitesse du premier arbre primaire 2, pour obtenir une multiplication de vitesse plus grande de ce rapport de vitesse.

On réalise de cette manière sans aucune modification de la mécanique, un rapport surmultiplié supplémentaire, apportant une grande multiplication de vitesse qui permet de réduire la vitesse de rotation du moteur. Le passage du cinquième V ou du septième VII rapport de vitesse au rapport surmultiplié, peut se faire en maintenant un couple moteur sur les roues motrices du véhicule.

En particulier à partir d'une vitesse assez élevée du véhicule et suivant certaines conditions de fonctionnement, le rapport surmultiplié peut être systématiquement engagé en cas de relâchement de la pédale d'accélérateur par le conducteur, pour réduire le freinage du véhicule par le moteur thermique qui tourne ainsi moins vite, et économiser de l'énergie. De plus le bruit et les vibrations sont aussi réduits.

## Revendications

1. Boîte de vitesses comportant un premier (2) et un deuxième (4) arbre primaire disposés suivant un axe commun et reliés chacun par un embrayage (C1, C2) à un moteur, et au moins un arbre secondaire (10, 100) portant un pignon de sortie (12, 102) qui engrène avec la couronne d'un différentiel entraînant les roues motrices du véhicule, chaque arbre primaire (2, 4) pouvant être relié à un arbre secondaire par des rapports de démultiplication comprenant chacun deux pignons réalisant un engrenage, formant pour le deuxième arbre primaire (4) un deuxième (II) et un quatrième (IV) rapport de vitesse, et pour le premier arbre primaire (2) un troisième (III) et un cinquième (V) rapport de vitesse, une unique liaison de transfert de marche avant (T) comprenant un arbre de transfert (50) pouvant relier les deux arbres primaires entre eux en réduisant la vitesse du deuxième arbre primaire (4) par rapport à celle du premier arbre primaire (2), **caractérisée en ce qu'**elle comporte un rapport de démultiplication supplémentaire formant un sixième rapport de vitesse (VI), pouvant relier directement le deuxième arbre primaire (4) à un arbre secondaire (10, 100) par deux pignons formant un engrenage.

2. Boîte de vitesses suivant la revendication 1, **caractérisée en ce que** le deuxième arbre primaire (4) comporte un creux longitudinal traversé par le premier arbre primaire (2).

3. Boîte de vitesses suivant la revendication 1 ou 2, **caractérisée en ce que** le sixième rapport de vitesse (VI), comporte un pignon fixe (200) disposé sur le deuxième arbre primaire (4).

4. Boîte de vitesses suivant l'une quelconque des revendications précédentes, **caractérisée en ce qu'**un pignon fixe d'entraînement (52) placé axialement entre deux rapports de vitesse du premier arbre primaire (2), engrène uniquement avec un pignon (54) de l'arbre de transfert (50).

5. Boîte de vitesses suivant l'une quelconque des revendications précédentes, **caractérisée en ce qu'**elle comporte un deuxième arbre secondaire (100), l'arbre de transfert (50) comprenant un creux longitudinal, étant traversé par un des arbres secondaires.

6. Boîte de vitesses suivant l'une quelconque des revendications 1 à 4, **caractérisée en ce qu'**elle comporte un deuxième arbre secondaire (100), l'arbre de transfert (50) étant latéralement décalé par rapport aux arbres secondaires (10, 100).

7. Boîte de vitesses suivant l'une des revendications 5 ou 6, **caractérisée en ce qu'**elle comporte un pignon fixe commun (24) sur le deuxième arbre primaire (4), pour réaliser le quatrième (IV) et le sixième (VI) rapport de vitesse.

8. Boîte de vitesses suivant l'une quelconque des revendications précédentes, **caractérisée en ce qu'**elle comporte un rapport de démultiplication supplémentaire formant un septième rapport de vitesse (VII).

9. Boîte de vitesses suivant la revendication 8, **caractérisée en ce qu'**elle comporte un pignon fixe commun (34) sur le premier arbre primaire (2), pour réaliser le cinquième (V) et le septième (VII) rapport de vitesse.

10. Boîte de vitesses suivant la revendication 8 ou 9, **caractérisée en ce que** le septième rapport de vitesse (VII) se trouve à l'arrière du premier arbre primaire (2).

11. Boîte de vitesses suivant l'une quelconque des revendications précédentes, **caractérisée en ce que** le deuxième rapport de vitesse (II), est situé en avant des autres rapports de vitesse (IV, VI) du deuxième arbre primaire (4).

12. Boîte de vitesses suivant la revendication 11, **caractérisée en ce qu'**une roue de parking (70) portée par l'arbre de transfert (50) ou un arbre secondaire (100), se trouve transversalement au niveau du manchon de synchronisation (602) du deuxième rapport de vitesse (II).

13. Boîte de vitesses suivant l'une quelconque des revendications précédentes, **caractérisée en ce qu'**elle comporte un pignon (606) engrenant avec la couronne du différentiel, et monté libre en rotation sur l'arbre de transfert (50), ce pignon étant lié en rotation à une roue de parking (70).

14. Boîte de vitesses suivant l'une quelconque des revendications précédentes, **caractérisée en ce qu'**elle comporte successivement en partant du côté avant sur un même arbre secondaire (10), le deuxième (II), le sixième (VI) puis le quatrième (IV) rapport de vitesse.

15. Boîte de vitesses suivant l'une quelconque des revendications précédentes, **caractérisée en ce qu'**un dernier rapport de vitesse surmultiplié est réalisé à partir du deuxième arbre primaire (4), avec le transfert (T) effectuant une multiplication de vitesse, disposé en série avec le cinquième (V) ou le septième (VII) rapport de vitesse du premier arbre primaire (2).

## Claims

1. Gearbox comprising a first (2) and a second (4) input shaft, which are arranged along a common axis and each connected to an engine by a clutch (C1, C2), and at least one countershaft (10, 100) with an output pinion (12, 102) that intermeshes with a differential crown pulling the driven wheels of the vehicle, each input shaft (2, 4) may be interconnected to a countershaft through gear reduction ratios, each comprising two pinions that form a gear, thus creating, for the second input shaft (4), a second (II) and a fourth (IV) speed ratio and, for the first input shaft (2), a third (III) and a fifth (V) speed ratio, a single forward transfer link (T) including a transfer shaft (50) which can interconnect both input shafts by reducing the speed of the second input shaft (4) in relation to that of the first input shaft (2), wherein it comprises an additional gear reduction ratio creating a sixth speed ratio (VI) capable of directly interconnecting the second input shaft (4) to a countershaft (10, 100) through two pinions forming a gear.

2. Gearbox according to claim 1, wherein the second input shaft (4) comprises a longitudinal hollow through which the first input shaft runs (2).

3. Gearbox according to claim 1 or 2, wherein the sixth speed ratio (VI) comprises a fixed pinion (200) which is arranged on the second input shaft (4).

4. Gearbox according to any of the previous claims, wherein a fixed drive pinion (52), which is axially spaced between two speed ratios in the first input shaft (2), only intermeshes with one pinion (54) from the transfer shaft (50).

5. Gearbox according to any of the previous claims, wherein it comprises a second countershaft (100), and the transfer shaft (50) includes a longitudinal hollow through which one of the countershafts run.

6. Gearbox according to any of claims 1 - 4, wherein it comprises a second countershaft (100), with a transfer shaft (50) that is offset laterally from the countershafts (10, 100).

7. Gearbox according to either claim 5 or 6, wherein it comprises a common fixed pinion (24) on the second input shaft (4) to achieve the fourth (IV) and sixth (VI) speed ratios.

8. Gearbox according to any of the previous claims, wherein it comprises an additional gear reduction ratio, forming a seventh speed ratio (VII).

9. Gearbox according to claim 8, wherein it comprises a common fixed pinion (34) on the first input shaft (2), to achieve the fifth (V) and the seventh (VII) speed ratios.

10. Gearbox according to claim 8 or 9, wherein the seventh speed ratio (VII) is located behind the first input shaft (2).

11. Gearbox according to any of the previous claims, wherein the second speed ratio (II), is located in front of the other speed ratios (IV, VI) in the second input shaft (4).

12. Gearbox according to claim 11, wherein a parking wheel (70), driven by the transfer shaft (50) or a countershaft (100), is located transversely to the synchronizing sleeve (602) in the second speed ratio (II).

13. Gearbox according to any of the previous claims, wherein it includes a pinion (606) that intermeshes with the differential crown, mounted so that it rotates freely on the transfer shaft (50), this pinion is connected in rotation to a parking wheel (70).

14. Gearbox according to any of the previous claims, wherein starting from the front side, on a same countershaft (10) it successively comprises the second (II), sixth (VI) and fourth (IV) speed ratios.

15. Gearbox according to one of the previous claims, wherein a final overdrive ratio is created using the second input shaft (4), with the transfer link (T) creating a multiplication of speed, arranged in series with the fifth (V) or seventh (VII) speed ratios in the first input shaft (2).

## Patentansprüche

1. Getriebe mit einer ersten (2) und zweiten (4) Primärwelle auf einer gemeinsamen Achse, die jeweils durch eine Kupplung (C1, C2) mit einem Motor verbunden sind, und mindestens einer Sekundärwelle (10, 100) mit einem in den Zahnkranz eines Differentialgetriebes greifenden Abtriebszahnrad (12, 102), das die Antriebsräder des Fahrzeugs antreibt. Jede Primärwelle (2, 4) kann durch Übersetzungen an eine Sekundärwelle angeschlossen werden, wobei jede aus zwei, ein Räderwerk bildende Zahnrädern besteht und die Bildung eines zweiten (II) und vierten (IV) Gangs durch die zweite Primärwelle (4), die Bildung eines dritten (III) und fünften (V) Gangs durch die erste Primärwelle (2) erfolgt. Es besteht eine einzige Verbindung zur Kraftübertragung vorne (T) in Form einer Übertragungswelle (50), wobei die beiden Primärwellen durch die Reduzierung der Geschwindigkeit der zweiten Primärwelle (4) im Verhältnis zur ersten Primärwelle (2) miteinander verbunden werden können. Zur Bildung eines sechsten Gangs (VI) ist es mit einer zusätzlichen Übersetzung ausgestattet, wobei die zweite Primärwelle (4) durch zwei, ein Räderwerk bildende Zahnräder direkt mit einer Sekundärwelle (10, 100) verbunden werden kann.

2. Getriebe nach Anspruch 1, wobei die zweite Primärwelle (4) mit einer Längsvertiefung ausgestattet ist, durch die die erste Primärwelle (2) verläuft.

3. Getriebe nach Anspruch 1 oder 2, wobei der sechste Gang (VI) mit einem festen Zahnrad (200) auf der zweiten Primärwelle (4) ausgestattet ist.

4. Getriebe nach einem der vorhergehenden Ansprüche, wobei ein festes Antriebszahnrad (52) axial zwischen zwei Gängen der ersten Primärwelle (2) platziert ist und in nur ein Zahnrad (54) der Übertragungswelle (50) eingreift.

5. Getriebe nach einem der vorhergehenden Ansprüche, das mit einer zweiten Sekundärwelle (100) ausgestattet ist, wobei die Übertragungswelle (50) mit einer Längsvertiefung ausgestattet ist, durch die eine der Sekundärwellen verläuft.

6. Getriebe nach einem der Ansprüche 1 - 4, das mit einer zweiten Sekundärwelle (100) ausgestattet ist, wobei die Übertragungswelle (50) seitlich verschoben zu den Sekundärwellen (10, 100) verläuft.

7. Getriebe nach einem der Ansprüche 5 oder 6, das zur Bildung des vierten (IV) und des sechsten (VI) Gangs mit einem festen, gemeinsamen Zahnrad (24) auf der zweiten Primärwelle (4) ausgestattet ist.

8. Getriebe nach einem der vorhergehenden Ansprüche, das zur Bildung eines siebten Gangs (VII) mit einer zusätzlichen Übersetzung ausgestattet ist.

9. Getriebe nach Anspruch 8, das zur Bildung des fünften (V) und siebten (VII) Gangs mit einem festen gemeinsamen Zahnrad (34) auf der ersten Primärwelle (2) ausgestattet ist.

10. Getriebe nach den Ansprüchen 8 oder 9, bei dem sich der siebte Gang (VII) hinter der ersten Primärwelle (2) befindet.

11. Getriebe nach einem der vorhergehenden Ansprüche, bei dem sich der zweite Gang (II) vor den anderen Gängen (IV, VI) der zweiten Primärwelle (4) befindet.

12. Getriebe nach Anspruch 11, wobei ein Anschlagrad (70) an der Übertragungswelle (50) oder einer Sekundärwelle (100) sich quer zu dem Synchronisierungsstutzen (602) des zweiten Ganges (II) befindet.

13. Getriebe nach einem der vorhergehenden Ansprüche mit einem in den Zahnkranz des Differentialgetriebes greifenden Zahnrad (606), das sich auf der Übertragungswelle (50) frei dreht; dieses Zahnrad ist bei der Drehung mit einem Anschlagrad (70) verbunden.

14. Getriebe nach einem der vorhergehenden Ansprüche, bei dem von der Vorderseite aus auf der gleichen Sekundärwelle (10) nacheinander der zweite (II), der sechste (VI) und der vierte (IV) Gang angebracht sind.

15. Getriebe nach einem der vorhergehenden Ansprüche mit einem letzten Schnellgang ab der zweiten Primärwelle (4), angeordnet in einer Reihe mit dem fünften (V) oder dem siebten (VII) Gang der ersten Primärwelle (2), wobei die Übertragung (T) ein Hochsetzen der Geschwindigkeit bewirkt.
